# DEMANDE DE BREVET EUROPEEN

(11) **EP 4 684 633 A1**
(43) Date de publication de la demande: **28.01.2026**
(21) Numéro de dépôt: 25191948.6
(22) Date de dépôt: 25.07.2025
(51) Int. Cl.: A01J 25/12, A01J 25/08

(54) **SYSTEME DE MOULAGE D'UN PRODUIT LAITIER COMPRENANT UN DISPOSITIF DE COMMANDE D'UNE VANNE A PARTIR D'UNE MESURE REPRESENTATIVE DE PRESSION**

(30) Priorité: 25.07.2024 FR 2408281
(71) Demandeur: Etablissements Chalon Megard, 01460 Montréal-la-Cluse (FR)
(72) Inventeur: DE MATTEIS, Mickael, 01460 MONTREAL-LA-CLUSE (FR); CRAMARD, Marc, 01460 MONTREAL-LA-CLUSE (FR)
(74) Mandataire: Alatis

(57) **Abrégé**

L'invention concerne système de moulage (1) d'un produit laitier tel qu'un fromage. Le système de moulage (1) comprend des récipients (3) de remplissage de moules (4) en mélange laitier, des conduits de dépressurisation (25) des récipients et des conduits d'alimentation (23) en mélange laitier des récipients (3). Le système de moulage (1) comprend une vanne d'alimentation (6) en mélange laitier par récipient (3) et un dispositif de commande (8) de chaque vanne d'alimentation (6). Le dispositif de commande (8) étant configuré pour comparer une pression dans chaque conduit de dépressurisation (25) à une valeur seuil.

## Description

### DOMAINE TECHNIQUE DE L'INVENTION

L'invention se rapporte de manière générale à la fabrication de denrées alimentaires, notamment à la transformation de produits laitiers. En particulier, l'invention concerne la fabrication d'un fromage, par exemple d'un fromage à pâte pressée. Les fromages à pâte pressée incluent des fromages à pâte pressée crue comme le cantal, le saint nectaire ou le reblochon et des fromages à pâte pressée cuites telles que le comté, l'abondance ou le beaufort.

L'invention porte sur un système de moulage d'un produit laitier tel qu'un fromage. Plus précisément, l'invention a trait à un système de moulage d'un fromage qui est configuré pour soutirer un mélange laitier depuis une cuve jusqu'à un moule à fromage.

### ÉTAT DE LA TECHNIQUE ANTERIEURE

Pour fabriquer un fromage, le lait est coagulé, souvent après avoir été pasteurisé. La coagulation du lait est également appelée caillage. Sous l'action de ferments et/ou de pressures, une partie solide du lait, appelée le caillé, est séparée d'un liquide qui est nommé le petit-lait ou lacto-sérum. Le mélange caillé - sérum est ensuite moulé. Lorsque le fromage est un fromage à pâte pressée, le fromage est également pressé lors du moulage.

Pendant l'étape de moulage, le mélange caillé-sérum est transféré depuis une cuve jusqu'à des récipients de remplissage de moule à travers un circuit de transfert. Le circuit de transfert comporte des conduits d'alimentation en mélange caillé-sérum des récipients. Pour réguler le débit de mélange caillé-sérum alimentant les récipients, les conduits d'alimentation sont susceptibles d'être au moins partiellement écrasés pour provoquer une restriction de débit au niveau de l'écrasement.

L'écrasement d'un conduit d'alimentation est une méthode empirique qui est difficilement reproductible, qui présente des risques de variations élevées de débits entre les récipients, et qui nécessite un savoir-faire humain. Par ailleurs, l'écrasement d'un conduit d'alimentation est difficile et potentiellement dangereux à mettre en œuvre. Il est difficile de corriger un écrasement du conduit et le nombre d'erreurs dans la mise en œuvre de l'écrasement est limité. Enfin, un opérateur humain doit intervenir à proximité des récipients pour écraser le conduit d'alimentation, ce qui fait prendre un risque à l'opérateur.

Il existe un besoin pour un système de moulage d'un fromage qui limite les interventions d'un opérateur humain à proximité d'un récipient de remplissage d'un moule, qui améliore la reproductibilité de l'arrivée d'un mélange laitier dans le récipient de remplissage de moule, et qui augmente la précision de l'arrivée de mélange laitier dans le récipient.

### EXPOSE DE L'INVENTION

L'invention vise à remédier à tout ou partie des inconvénients de l'état de la technique mentionnés ci-dessus.

A cet égard, l'invention a pour objet un système de moulage d'un produit laitier tel qu'un fromage. Le système de moulage comprend des récipients pour le remplissage de moules en mélange laitier, un conduit de dépressurisation par récipient et un conduit d'alimentation en mélange laitier par récipient.

Selon l'invention, le système de moulage comprend une vanne d'alimentation en mélange laitier par récipient et un dispositif de commande pour chaque vanne d'alimentation. Chaque vanne d'alimentation comprend un obturateur qui est mobile au moins entre une position ouverte et une position fermée. La vanne d'alimentation laisse circuler le mélange laitier à travers le conduit d'alimentation en mélange laitier lorsque l'obturateur est en position ouverte. La vanne d'alimentation empêche la circulation de mélange laitier à travers le conduit d'alimentation en mélange laitier du récipient lorsque l'obturateur est en position fermée. Le dispositif de commande est configuré pour commander la position de chaque obturateur et pour comparer une pression dans chaque conduit de dépressurisation à une valeur seuil.

Grâce au système de moulage tel que revendiqué, l'intervention d'un opérateur humain est limitée voire supprimée, la reproductibilité de l'arrivée d'un mélange laitier dans le récipient est améliorée, et la précision du moulage est augmentée, en réduisant notamment les différences d'arrivée de mélange laitier dans les moules. Les inconvénients liés à une méthode empirique de commande de débit dans le conduit d'alimentation sont réduits. La commande du débit peut se faire plus facilement et sans danger pour un opérateur humain.

Les risques liés à une intervention d'un opérateur humain à proximité des conduits d'alimentation sont limités, en évitant à un opérateur d'écraser le conduit d'alimentation en mélange laitier. Le moulage est amélioré en rendant l'arrivée du mélange laitier dans chaque moule davantage reproductible, en évitant par exemple d'écraser de manière empirique chaque conduit d'alimentation en mélange laitier. La précision du moulage est augmentée, en réduisant notamment les variations de remplissage des moules et en étant susceptible de faire varier le débit de mélange laitier dans le conduit d'alimentation au cours de l'étape de moulage. L'automatisation du système de moulage est favorisée, en permettant par exemple une régulation automatique du débit de mélange laitier dans chaque conduit d'alimentation au cours de l'étape de moulage.

Selon une particularité de réalisation, le dispositif de commande est configuré pour commander à l'obturateur de chaque vanne d'alimentation d'être en position ouverte lorsqu'une valeur de pression dans le conduit de dépressurisation est inférieure à une première valeur seuil lors du vidage d'une cuve contenant le mélange laitier vers les récipients.

Selon une particularité de réalisation, le dispositif de commande de la vanne est configuré pour commander à l'obturateur de chaque vanne d'alimentation d'être en position fermée lorsqu'une valeur de pression dans le conduit de dépressurisation est supérieure à une deuxième valeur seuil lors du vidage de la cuve.

Selon une autre particularité de réalisation, le système de moulage comprend au moins un capteur de valeur représentative de pression par conduit de dépressurisation, qui est configuré pour mesurer une valeur représentative de pression dans le conduit de dépressurisation.

Selon une particularité de réalisation, chaque obturateur est dans la position ouverte lorsque le système de moulage détermine que la valeur de pression dans le conduit de dépressurisation du récipient est inférieure à la première valeur seuil à partir de la mesure de valeur représentative de pression lors du vidage de la cuve du mélange laitier.

Selon une particularité de réalisation, chaque obturateur est dans la position fermée lorsque le système de moulage détermine que la valeur de pression dans le conduit de dépressurisation du récipient est supérieure à la deuxième valeur seuil à partir de la mesure de valeur représentative de pression lors du vidage de la cuve du mélange laitier.

Selon une autre particularité de réalisation, le dispositif de commande comprend une unité électronique de commande par vanne d'alimentation, qui est configurée pour commander l'ouverture et/ou la fermeture de l'obturateur de la vanne d'alimentation à partir de la mesure de valeur représentative de pression lors du vidage de la cuve. L'unité de commande est configurée pour comparer la pression dans le conduit de dépressurisation à la valeur seuil.

Selon une particularité de réalisation, chaque vanne d'alimentation comprend un actionneur pneumatique qui est commandé par l'unité électronique de commande pour ouvrir et/ou fermer au moins partiellement l'obturateur de la vanne d'alimentation.

Selon une autre particularité de réalisation, le système de moulage comprend un capteur de position par vanne d'alimentation, qui est configuré pour détecter la position de l'obturateur de la vanne d'alimentation.

Selon une particularité de réalisation, le dispositif de commande comprend un module de commande à distance qui est configuré pour permettre à un opérateur humain de commander à distance l'ouverture et/ou la fermeture de chaque vanne d'alimentation, notamment pour isoler chaque récipient. Le module de commande à distance est notamment situé à distance de chaque récipient, de chaque conduit d'alimentation et de chaque conduit de dépressurisation.

Selon une autre particularité de réalisation, chaque obturateur comprend au moins une position intermédiaire stable dans lequel l'obturateur est entre la position ouverte et la position fermée. Le dispositif de commande est configuré pour commander à chaque obturateur d'être en position intermédiaire lorsqu'une valeur de pression dans le conduit de dépressurisation est strictement entre la première valeur seuil et la deuxième valeur seuil lors du vidage de la cuve.

Selon une particularité de réalisation, le système de moulage est configuré pour réguler la pression dans chaque conduit de dépressurisation en commandant l'ouverture et/ou la fermeture au moins partielle de chaque vanne d'alimentation, notamment pour que la pression dans chaque conduit de dépressurisation soit sensiblement constante lors du vidage de la cuve.

Selon une autre particularité de réalisation, le système de moulage comprend un dispositif de dépressurisation qui est configuré pour diminuer la pression dans chaque conduit de dépressurisation, notamment en dessous de la pression atmosphérique. Le dispositif de dépressurisation comprend une pompe.

Selon une particularité de réalisation, le système de moulage comprend une cuve qui est configurée pour contenir le mélange laitier. Les récipients de remplissage de moule sont reliés à la cuve par un circuit de transfert pour transférer un mélange laitier entre la cuve et les récipients. Le circuit de transfert comprend les conduits d'alimentation pour alimenter chacun des récipients en mélange laitier en provenance de la cuve.

Selon une autre particularité de réalisation, le système de moulage comprend un distributeur qui est configuré pour distribuer le mélange laitier en provenance de la cuve entre les conduits d'alimentation en mélange laitier pour transférer le mélange laitier à chaque récipient.

Selon une particularité de réalisation, le système de moulage comprend une vanne de vidage de la cuve. La vanne de vidage de la cuve comprend un obturateur qui est mobile entre une position d'ouverture et une position de fermeture. L'obturateur de la vanne de vidage de la cuve laisse circuler le mélange laitier en direction de chaque récipient lorsque l'obturateur est en position d'ouverture. L'obturateur de la vanne de vidage de la cuve empêche la circulation du mélange laitier en direction de chaque récipient lorsque l'obturateur est en position de fermeture.

L'invention porte également sur un procédé de moulage d'un fromage qui est mis en œuvre à partir d'un système de moulage tel que défini ci-dessus.

Selon une autre particularité de réalisation, le procédé de moulage comprend une étape d'ouverture de chaque vanne d'alimentation lorsque la pression dans le conduit de dépressurisation du récipient est inférieure à une première valeur seuil lors du vidage de la cuve. En plus ou en variante, le procédé de moulage comprend une étape de fermeture de chaque vanne d'alimentation lorsque la pression dans le conduit de dépressurisation du récipient est supérieure à la deuxième valeur seuil lors du vidage de la cuve.

Selon une autre particularité de réalisation, l'ouverture et/ou la fermeture de chaque vanne est commandée à partir de la mesure de la valeur représentative de pression dans le conduit de dépressurisation du récipient, pour que l'ouverture de l'obturateur soit partielle lorsque la valeur représentative de pression est strictement entre la première valeur seuil et la deuxième valeur seuil lors du vidage de la cuve.

Selon une particularité de réalisation, l'obturateur de chaque vanne d'alimentation est en position ouverte lors de la dépressurisation du conduit de dépressurisation et avant l'ouverture de la vanne de vidage de la cuve.

Selon une autre particularité de réalisation, l'obturateur de chaque vanne d'alimentation est dans la position ouverte lorsque la cuve a été vidée et que les moules ont été remplis.

### BREVE DESCRIPTION DES FIGURES

La présente invention sera mieux comprise à la lecture de la description d'exemples non limitatifs de réalisation, en référence aux figures annexées, qui illustrent :
- figure 1 : une représentation schématique d'un système de moulage de fromage selon un premier mode de réalisation de l'invention ;
- figure 2 : une représentation schématique partielle en perspective du système de moulage selon le premier mode de réalisation, au niveau d'un récipient de remplissage de moule ;
- figure 3 : une représentation d'un premier, d'un deuxième et d'un troisième type d'obturateurs pour une vanne de remplissage de moule selon un premier mode de réalisation de l'invention;
- figure 4 : une illustration schématique d'un dispositif de commande de la vanne de remplissage de moule selon le premier mode de réalisation de l'invention ;
- figure 5 : une illustration schématique de la régulation d'une vanne selon le premier mode de réalisation ;
- figure 6 : une illustration schématique d'un procédé de moulage qui est mis en œuvre à partir du système de moulage selon le premier mode de réalisation ;
- figure 7 : une illustration schématique de la régulation de l'ouverture de la vanne selon le premier mode de réalisation lors du vidage d'une cuve du système de moulage de fromage.

Pour plus de clarté, les éléments identiques ou similaires sont repérés par des signes de référence identiques sur l'ensemble des figures.

### DESCRIPTION DETAILLEE D'UN MODE DE REALISATION

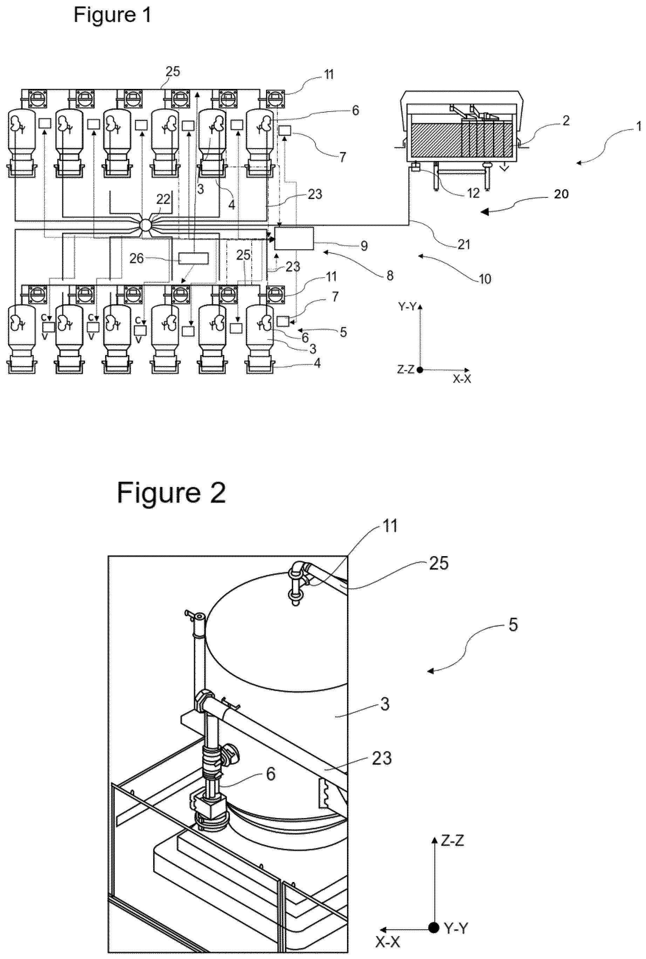

La figure 1 représente un système de moulage 1 pour la fabrication d'un produit laitier tel qu'un fromage. Le fromage est par exemple un fromage à pâte pressée crue ou cuite. Le fromage est fabriqué à partir d'un mélange laitier, typiquement un mélange caillé-sérum qui est obtenu après une étape de caillage. Le moulage du fromage à pâte pressée par le système de moulage 1 comprend notamment le pressage du mélange laitier dans chaque moule 4 du système de moulage **1.**

Le système de moulage **1** comporte une cuve **2**, des récipients **3** de remplissage d'un moule **4** en mélange laitier, les moules **4**, un système de contrôle et de commande **10** et un circuit de transfert **20**. Les récipients **3** et les moules **4** sont réunis au sein de groupes **5** de soutirage sous vide du système de moulage **1**. Le système de moulage **1** est configuré pour mouler un fromage à partir du mélange laitier contenu dans la cuve **2** du système de moulage **1**.

Dans la description et les revendications et sauf précision du contraire, la terminologie longitudinal, transversal et vertical renvoie au trièdre **X-X**, **Y-Y**, **Z-Z** qui est représenté aux figures 1 et 2. Une direction parallèle à la direction longitudinale **X-X** du système de moulage **2** est également appelée direction axiale. Les termes avant et arrière sont définis relativement à la direction axiale. La direction transversale **Y-Y** est une direction de la largeur du système de moulage **1**. La direction verticale **Z-Z** est une direction de la hauteur du système de moulage **1** et notamment de chaque récipient **3**. La direction verticale **Z-Z** est perpendiculaire à la direction axiale et à la direction transversale. Les termes inférieurs et supérieurs sont définis en référence à la direction de la hauteur **Z-Z** par rapport à une orientation d'utilisation relativement au sol de chaque récipient **3**.

En référence plus spécifiquement au mode de réalisation représenté, le système de moulage **1** comprend par exemple deux rangs de groupes de soutirage **5** sous vide qui sont espacés selon la direction transversale **Y-Y.** En particulier, chaque rang comporte six groupes de soutirage **5** sous vide qui sont alignés selon la direction longitudinale **X-X** du système de moulage **1.**

En référence aux figures 1 et 2, chaque groupe de soutirage **5** sous vide comprend un récipient **3** de remplissage de moule, un conduit d'alimentation **23** en mélange laitier, une vanne d'alimentation **6** en mélange laitier, un conduit de dépressurisation **25** et un capteur de valeur représentatif de pression **11**. Les groupes de soutirage **5** sous vide sont par exemples identiques entre eux. Chaque groupe de soutirage **5** sous vide est configuré pour soutirer le mélange laitier de la cuve **2** à destination d'un des moules **4**.

Dans chaque groupe de soutirage **5** sous vide, le conduit d'alimentation **23** en mélange laitier est raccordé au récipient **3** dans une partie inférieure du récipient **3**. Le conduit de dépressurisation **25** et/ou de lavage est raccordé au récipient dans une partie supérieure du récipient **3**. Le lavage du récipient **3** et du conduit d'alimentation **23** en mélange laitier sont facilités.

En référence à la figure 1, la cuve **2** est destinée à contenir le mélange laitier qui est par exemple brassé dans la cuve **2** pour être homogène. La cuve **2** est notamment configurée pour chauffer le mélange laitier, par exemple au-dessus de 80°C, lorsque le fromage est à pâte pressée cuite. La cuve **2** est configurée pour alimenter en mélange laitier chacun des récipients **3** du système de moulage par l'intermédiaire du circuit de transfert **20.**

Le circuit de transfert **20** comprend un conduit de vidage **21** de la cuve, des conduits d'alimentation **23** des récipients en mélange laitier, des conduits de dépressurisation **25** des récipients, une pompe **26**, une vanne de vidage **12** de la cuve, des vannes d'alimentation **6** pour alimenter en mélange laitier les récipients **3**, et un distributeur **22**. Le circuit de transfert **20** est configuré pour alimenter les récipients **3** en fluide, typiquement en mélange laitier et en liquide de nettoyage. Le circuit de transfert **20** est par exemple configuré pour que le mélange laitier contenu dans la cuve **2** soit soutiré en moins de cinq minutes en direction des moules **4.**

Le conduit de vidage **21** de la cuve relie fluidiquement la cuve **2** au distributeur **22** pour alimenter le distributeur **22** en mélange laitier depuis la cuve **2**. Le conduit de vidage **21** forme un conduit d'entrée du distributeur **22**. Les conduits d'alimentation **23** des récipients en mélange laitier relient chacun fluidiquement le distributeur **22** à un des récipients **3** de remplissage de moule. Les conduits d'alimentation **23** des récipients en mélange laitier forment les conduits de sortie du distributeur **22**. Les conduits d'alimentation **23** en mélange laitier sont des conduits de distribution du mélange laitier entre les récipients **3**.

La vanne de vidage **12** de la cuve comprend un obturateur qui est mobile entre une position d'ouverture et une position de fermeture qui sont des positions stables de l'obturateur de la vanne de vidage **12**. En position d'ouverture, l'obturateur de la vanne de vidage **12** de la cuve laisse circuler le mélange laitier à travers le conduit de vidage **21** en direction du distributeur **22** et des récipients **3**. En position de fermeture, l'obturateur de la vanne de vidage **12** de la cuve empêche la circulation du mélange laitier à travers le conduit de vidage **21** en direction du distributeur **22** et des récipients **3**.

Le distributeur **22** comprend un élément mobile de distribution qui relie le conduit de vidage **21** de la cuve à au moins un des conduits d'alimentation **23** en mélange laitier de récipient. Le distributeur **22** est configuré pour distribuer le mélange laitier en provenance de la cuve **2** entre les conduits d'alimentation **23** en mélange laitier de récipient pour transférer le mélange laitier aux récipients **3**. Le distributeur **22** est par exemple apte à isoler un des récipients **3** lors du soutirage de la cuve **2**.

Chaque vanne d'alimentation **6** en mélange laitier de récipient comprend un obturateur **60** qui est mobile au moins entre une position ouverte et une position fermée qui sont des positions stables de l'obturateur **60.** Chaque vanne d'alimentation **6** laisse au moins partiellement circuler le mélange laitier à travers le conduit d'alimentation **23** en mélange laitier lorsque l'obturateur **60** est en position ouverte. Chaque vanne d'alimentation **6** empêche au moins partiellement la circulation de mélange laitier à travers le conduit d'alimentation **23** en mélange laitier lorsque l'obturateur **60** est en position fermée. Chaque vanne d'alimentation **6** en mélange laitier de récipient joue par exemple le rôle d'une vanne de remplissage de moule.

Chaque obturateur **60** est dans la position ouverte lorsqu'une valeur de pression dans le conduit de dépressurisation **25** du récipient est inférieure à une première valeur seuil lors du vidage de la cuve **2**. Chaque obturateur **60** est dans la position fermée lorsqu'une valeur de pression dans le conduit de dépressurisation **25** du récipient est supérieure à une deuxième valeur seuil lors du vidage de la cuve 2.

En référence plus spécifiquement au mode de réalisation représenté, en position ouverte de l'obturateur **60,** la vanne d'alimentation **6** laisse circuler un maximum de mélange laitier à travers le conduit d'alimentation **23** en mélange laitier jusqu'au récipient **3**. En position fermée de l'obturateur **60,** la vanne d'alimentation **6** en mélange laitier empêche totalement la circulation de mélange laitier entre la cuve **2** et le récipient **3** de remplissage de moule **4** à travers le conduit d'alimentation **23** en mélange laitier de récipient. La position ouverte et la position fermée sont des positions extrêmes de l'obturateur **60.**

En référence plus spécifiquement au mode de réalisation représenté, l'obturateur **60** comprend au moins un position intermédiaire stable dans lequel l'obturateur **60** est entre la position ouverte et la position fermée. En position intermédiaire, l'obturateur **60** est partiellement ouvert et partiellement fermé. En position intermédiaire, l'obturateur **60** laisse circuler un mélange laitier dans le conduit de dépressurisation **25** entre la cuve **2** et le récipient **3** de remplissage de moule **4** avec un débit maximum qui est inférieur à un débit maximum de mélange laitier dans le conduit de dépressurisation **25** lorsque l'obturateur **60** est en position ouverte. La deuxième valeur seuil est strictement supérieure à la première valeur seuil. L'obturateur **60** est en position intermédiaire lorsque la pression dans le conduit de dépressurisation **25** est strictement entre la première valeur seuil et la deuxième valeur seuil lors du vidage de la cuve **2**. L'obturateur **60** comprend par exemple une continuité de position intermédiaires stables distinctes entre la position ouverte et la position fermée dans lesquels l'obturateur **60** est strictement entre la position ouverte et la position fermée. L'ouverture de l'obturateur **60** en position intermédiaire est par exemple entre 60% et 80% de l'ouverture de l'obturateur **60** en position ouverte.

La vanne d'alimentation **6**, en particulier l'obturateur **60,** est fabriquée dans au moins un matériau qui est compatible avec les normes alimentaires, par exemple en acier inoxydable alimentaire. Le matériau de la vanne comprend par exemple de l'acier inoxydable **316** avec une rugosité de minimum 0,8 mm. Le matériau de la vanne est compatible avec l'utilisation de détergents puissants pour l'industrie alimentaire, par exemple des concentrations d'acide forts ou de base forte à 2%. Le matériau de la vanne est également compatible avec des températures de 80°C à 100°C. Il est compatible avec une mise à vide, par exemple jusqu'à une atteindre une pression de 0,90 hPa.

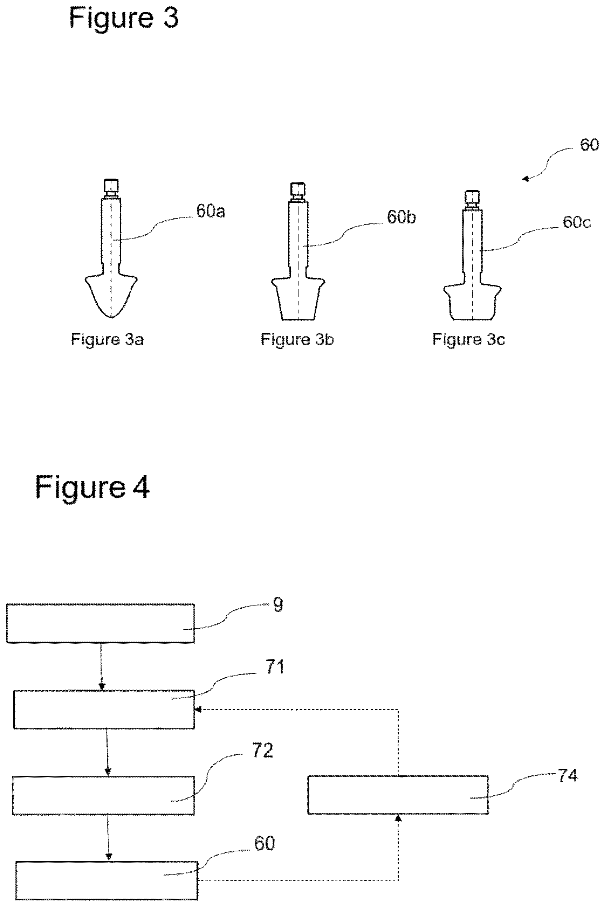

La vanne d'alimentation **6** ne comporte aucune zone de rétention, pour éviter l'accumulation de résidus de produits alimentaires. En particulier et en référence à la figure 3, la partie supérieure de l'obturateur **60a**, **60b**, **60c** a une forme en pente douce permettant l'évacuation de liquide et évitant que des produits d'origine alimentaires stagnent sur une surface supérieure de l'obturateur **60**. En référence plus spécifiquement au premier type 3a d'obturateur, une partie inférieure de l'obturateur **60a** a par exemple une forme partiellement tronconique. En référence plus spécifiquement au troisième type 3c d'obturateur, une partie inférieure de l'obturateur **60c** a par exemple une forme cylindrique. En référence plus spécifiquement au deuxième type 3b d'obturateur, une partie inférieure de l'obturateur **60b** a par exemple une forme qui est entre une forme cylindrique et une forme tronconique.

En référence à la figure 4 et en référence plus spécifiquement au mode de réalisation représenté, chaque vanne d'alimentation **6** comprend par exemple un actionneur pneumatique **72** qui est configuré pour déplacer l'obturateur **60** par rapport à un corps de la vanne, pour ouvrir et/ou fermer la vanne d'alimentation **6**. L'actionneur pneumatique **72** forme un transducteur pneumatique mécanique du système de moulage **1.**

Le conduit de vidage **21** de la cuve, la vanne de vidage **12** de la cuve, le distributeur **22**, les conduits **25** d'alimentation en mélange laitier de récipient, et les vannes d'alimentation **6** en mélange laitier de récipient forment conjointement un dispositif de transfert de mélange laitier depuis la cuve **2** jusqu'aux récipients **3** de remplissage de moule.

Le système de moulage **1** comprend un dispositif de dépressurisation d'au moins une partie du circuit de transfert **20** et un dispositif de nettoyage configuré pour nettoyer au moins le dispositif de transfert. Le dispositif de dépressurisation comprend un système de pompage et les conduits de dépressurisation **25**. Le dispositif de dépressurisation est configuré pour abaisser la pression dans chaque conduit de dépressurisation **25** pour que le mélange laitier soit aspiré depuis la cuve **2** vers chaque récipient **3** de remplissage de moule **4.**

En particulier, le système de pompage comporte au moins une pompe **26** et le système de pompage est configuré pour diminuer le la pression dans chaque conduit de dépressurisation **25**, notamment en dessous de la pression atmosphérique. La pompe **26** est de préférence une pompe à vide qui est configurée pour atteindre une pression de 0,90 mbar, c'est à-dire une pression de 0,90 hPa.

Dans le mode de réalisation représenté, les conduits de dépressurisation **25** sont également des conduits de lavage des récipients, qui sont configurés pour injecter un liquide de nettoyage dans les récipients **3** une fois la fabrication de fromage terminée. Le système de pompage est par exemple désactivé lors du nettoyage du système de moulage **1**.

Le système de contrôle et de commande **10** comprend des capteurs de valeur représentative de pression **11**, des détecteurs de position **74** d'obturateurs et des dispositifs de commande **8**. Le système de contrôle et de commande **10** est configuré pour surveiller et commander le fonctionnement de la vanne de vidage **12** de la cuve et des vannes d'alimentation **6** en mélange laitier de récipients.

Chaque capteur de valeur représentative de pression **11** est configuré pour mesurer d'une valeur représentative de pression dans un des conduits de dépressurisation **25**. Le capteur de valeur représentative de pression **11** est par exemple installé à proximité du récipient **3**. Dans le mode de réalisation représenté, chaque capteur de valeur représentative de pression **11** est un capteur de pression.

En référence à la figure 4, le système de contrôle et de commande **10** comporte un détecteur de position **74** de l'obturateur par vanne d'alimentation **6**. Le détecteur de position **74** de l'obturateur comprend un capteur de position. Le détecteur **74** de position de l'obturateur comprend un capteur magnétrorésistif. Ce capteur est de préférence un capteur magnétrorésistif anisotrope qui est également connu sous le nom de « capteur AMR ».

En référence conjointe aux figures 1 à 6, le dispositif de commande **8** de chaque vanne d'alimentation **6** en mélange laitier comprend une unité électronique centrale **9** de commande et des unités électroniques locales **7** de commande. Chaque dispositif de commande **8** est configuré pour commander la position de l'obturateur **60** d'une des vannes d'alimentation **6** en mélange laitier. Chaque dispositif de commande **8** est configuré pour comparer la pression mesurée dans un des conduits de dépressurisation **25** à la première valeur seuil et à la deuxième valeur seuil lors du vidage de la cuve **2.**

Le dispositif de commande **8** de chaque vanne d'alimentation **6** est configuré pour commander à l'obturateur **60** d'être dans la position ouverte lorsque la valeur de pression dans le conduit de dépressurisation **25** est inférieure à la première valeur seuil lors du vidage d'une cuve **2**, notamment à partir de la mesure par le capteur de valeur représentative de pression **11**. Le dispositif de commande **8** de chaque vanne d'alimentation **6** est configuré pour commander à l'obturateur **60** d'être dans la position fermée lorsque la valeur de pression dans le conduit de dépressurisation **25** est supérieure à la deuxième valeur seuil lors du vidage de la cuve **2** du mélange laitier, notamment à partir de la mesure par le capteur de valeur représentative de pression **11**. Le dispositif de commande **8** de chaque vanne d'alimentation **6** est configuré pour commander à l'obturateur **60** d'être en position intermédiaire lorsque la valeur de pression dans le conduit de dépressurisation **25** est strictement entre la première valeur seuil et la deuxième valeur seuil lors du vidage de la cuve **2** en mélange laitier, notamment à partir de la mesure par le capteur de valeur représentative de pression **11**.

Le dispositif de commande **8** de chaque vanne d'alimentation **6** est notamment configuré pour commander l'ouverture et/ou la fermeture au moins partielle de chaque vanne d'alimentation **6** pour que la pression dans le conduit de dépressurisation **25** soit sensiblement constante lors du vidage de la cuve **2**. Le dispositif de commande **8** régule la pression dans le conduit de dépressurisation **25** en commandant l'ouverture et/ou la fermeture de la vanne d'alimentation **6.**

Le système de moulage **1** comprend une seule unité électronique centrale **9** de commande. L'unité électronique centrale **9** de commande est commune à chacun des dispositifs de commande **8** et à chacune des vannes d'alimentation **6**. L'unité électronique centrale **9** de commande est un module de commande à distance qui est configuré pour permettre à un opérateur humain de commander l'ouverture et/ou la fermeture de chaque vanne d'alimentation **6**. L'unité électronique centrale **9** de commande permet par exemple à un opérateur d'ouvrir ou de fermer au moins une des vannes d'alimentation **6** en cas d'urgence. L'unité électronique centrale **9** de commande est située à distance du récipient **3,** du conduit d'alimentation **23** en mélange laitier et du conduit de dépressurisation **25**.

Chaque unité électronique locale de commande **7** est située à proximité du capteur de valeur représentative de pression **11**. Chaque unité de commande **7** est configurée pour commander l'ouverture et/ou la fermeture de l'obturateur **60** de la vanne d'alimentation **6** lors du vidage de la cuve **2** à partir de la mesure de valeur représentative de pression mesurée par le capteur de valeur représentative de pression **11**.

Dans le mode de réalisation représenté et en référence à la figure 4, l'unité électronique locale de commande **7** comprend par exemple un transducteur électrique pneumatique **71** qui est configuré pour transformer un signal électrique de commande, notamment en provenance de l'unité électronique centrale **9**, en une commande pneumatique de l'actionneur pneumatique **72**.

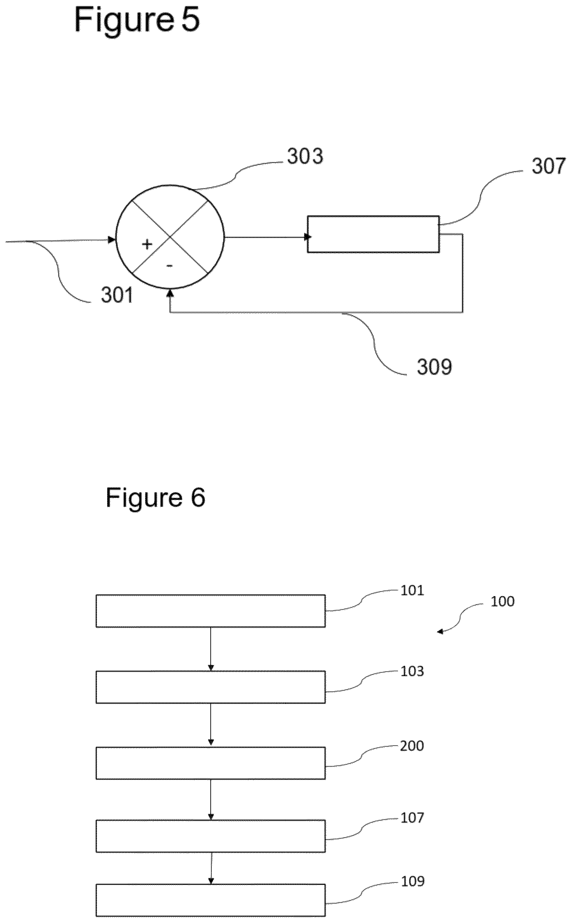

La figure 5 illustre schématiquement la régulation de l'ouverture et/ou de la fermeture de chaque vanne d'alimentation **6**. Une consigne d'ouverture **301** de la vanne d'alimentation **6** est émise, par exemple par l'unité électronique centrale **9** de commande. La consigne d'ouverture **301** de la vanne d'alimentation **6** est transformée en commande d'ouverture **303** de la vanne d'alimentation **6**, par exemple en une commande pneumatique d'ouverture de la vanne d'alimentation **6** qui est émise par l'unité électronique locale 7. Il s'ensuit une ouverture **307** de l'obturateur **60** de la vanne d'alimentation **6**. Une mesure de valeur représentative de pression **309** est réalisée dans le conduit de dépressurisation **25**. La commande d'ouverture **303** de la vanne d'alimentation **6** est modifiée si nécessaire à partir de la mesure de valeur représentative de pression **309**, après comparaison de la pression dans le conduit de dépressurisation **25** avec la première valeur seuil et/ou avec la deuxième valeur seuil.

La figure 6 illustre un procédé de moulage **100** d'un produit laitier tel qu'un fromage qui est mis en œuvre par le système de moulage **1**. Le procédé de moulage **100** comprend une étape **101** de dépressurisation du système de moulage, une étape **103** d'ouverture de la vanne de vidage de la cuve, la régulation **200** de l'ouverture et/ou de la fermeture de chaque vanne d'alimentation **6**, la fin de soutirage **107** de la cuve en mélange, et une étape **109** de nettoyage du circuit de transfert **20** et des récipients **3**. Le procédé de moulage **100** du produit laitier est notamment mis en œuvre lors d'un procédé de fabrication d'un fromage.

Pendant l'étape **101** de dépressurisation du système de moulage **1**, les vannes d'alimentation **6** sont ouvertes et la vanne de vidage **12** de la cuve est fermée. Durant l'étape **101** de dépressurisation, la pompe **26** du système de pompage abaisse la pression dans le circuit de transfert **20**, notamment en aspirant l'air dans les conduits de dépressurisation **25**. Chaque conduit de dépressurisation **25** est notamment dépressurisé au moins jusqu'à ce que la valeur de pression dans le conduit de dépressurisation **25** soit au moins inférieure à la première valeur seuil.

L'étape **103** d'ouverture de l'obturateur de la vanne de vidange **12** a lieu lorsque le conduit de dépressurisation **25** a été dépressurisé. Le mélange laitier est alors soutiré depuis la cuve **2** jusqu'aux moules **4** à travers les récipients **3**.

La régulation **200** de l'ouverture et/ou de la fermeture de l'obturateur **60** de chaque vanne d'alimentation se déroule lors du soutirage du mélange laitier depuis la cuve **2**. La régulation du débit de mélange laitier dans chaque conduit d'alimentation **23** en mélange laitier de récipient s'effectue en régulant la pression dans chaque conduit de dépressurisation **25**, notamment en comparant la pression dans le conduit de dépressurisation **25** à la première valeur seuil et/ou à la deuxième valeur seuil.

A la fin de soutirage **207** de la cuve **2**, la cuve **2** a été vidé du mélange laitier, les récipients **3** ont été vidés en mélange laitier, les moules **4** ont été remplis. L'obturateur de la vanne de vidage **12** de la cuve est ouvert. L'obturateur de chaque vanne d'alimentation **6** est ouvert.

Lors de l'étape **109** de nettoyage du circuit de transfert **20** et des récipients, du liquide de lavage est introduit dans les conduits de dépressurisation **25** pour laver les récipients **3**, les vannes d'alimentation **6**, les conduits d'alimentation **25** en mélange laitier, le distributeur **22**, le conduit de vidage **21** de la cuve, la vanne de vidage **12** de la cuve. La cuve **2** est susceptible d'être nettoyée par le liquide de lavage lors de l'étape **109** de nettoyage.

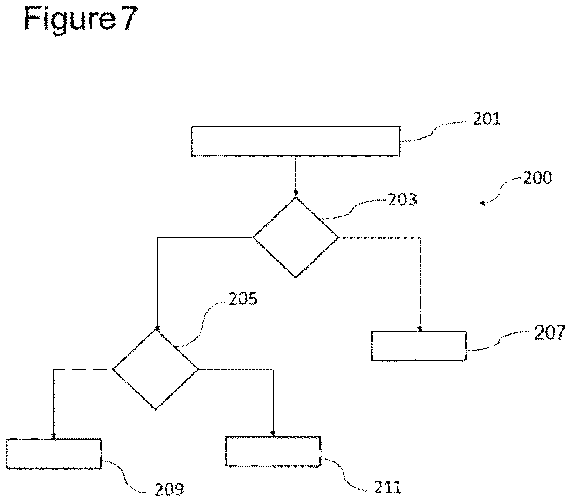

La figure **7** illustre la régulation **200** de l'ouverture et/ou de la fermeture de l'obturateur **60** de chaque vanne d'alimentation **6** lors du vidage de la cuve **2**. La régulation **200** comprend une mesure **201** de la valeur représentative de pression dans le conduit de dépressurisation **25** par le capteur de valeur représentative de pression **11** pour déterminer la pression dans le conduit de dépressurisation **25** lors du vidage de la cuve **2**. La régulation **200** comprend la comparaison **203** de la pression dans le conduit de dépressurisation **25** avec la première valeur seuil et/ou avec la deuxième valeur seuil.

La régulation **200** comprend l'ouverture totale **207** de l'obturateur **60** de la vanne d'alimentation **6** lorsque la pression dans le conduit de dépressurisation **25** est inférieure à la première valeur seuil. Chaque obturateur **60** passe dans la position ouverte lorsque la valeur de pression mesurée dans le conduit de dépressurisation **25** devient inférieure à la première valeur seuil lors du vidage de la cuve **2** du mélange laitier.

Lorsqu'il est déterminé que la pression dans le conduit de dépressurisation **25** est supérieure à la première valeur seuil, la régulation **200** comprend la comparaison **205** de la pression dans le conduit de dépressurisation **25** à la deuxième valeur seuil. Lorsqu'il est déterminé que la pression dans le conduit de dépressurisation est supérieure à la deuxième valeur seuil, la régulation **200** comprend la fermeture totale **209** de l'obturateur **60** de la vanne d'alimentation. L'obturateur **60** passe dans la position fermée lorsque la valeur de pression mesurée dans le conduit de dépressurisation **25** devient supérieure à la deuxième valeur seuil lors du vidage de la cuve **2**.

Lorsqu'il est déterminé que la pression dans le conduit de dépressurisation **25** est strictement compris entre la première valeur seuil et la deuxième valeur seuil, la régulation **200** comprend l'ouverture partielle de l'obturateur **60** de la vanne d'alimentation. L'obturateur **60** passe en position intermédiaire lorsque la valeur de pression mesurée dans le conduit de dépressurisation **25** devient strictement entre la première valeur seuil et la deuxième valeur seuil lors du vidage de la cuve **2**.

Grâce au système de moulage **1** tel que revendiqué, l'intervention d'un opérateur humain est limitée voire supprimée, la reproductibilité de l'arrivée d'un mélange laitier dans le récipient **3** est améliorée, et la précision du moulage est augmentée. Les inconvénients liés à une méthode empirique de commande de débit dans le conduit d'alimentation **25** en mélange laitier sont réduits. Les variations de remplissage des moules **4** tendent à diminuer. Les besoins en savoir-faire pour transférer le mélange laitier d'une cuve **2** au récipient **3** sont réduits. Il est plus facile de faire varier le débit de mélange laitier alimentant le récipient, y compris au cours du moulage. La commande du débit dans le conduit d'alimentation **25** en mélange laitier peut se faire plus facilement et avec moins de danger pour un opérateur humain.

Les risques liés à une intervention d'un opérateur humain à proximité des conduits d'alimentation sont limités, en évitant à un opérateur d'écraser le conduit d'alimentation **25** en mélange laitier. Le moulage est amélioré en rendant l'arrivée du mélange laitier dans le moule **4** davantage reproductible, en évitant par exemple d'écraser de manière empirique un conduit d'alimentation **25** en mélange laitier. La précision du moulage est augmentée, en réduisant notamment les variations de remplissage des moules et en étant susceptible de faire varier le débit de mélange laitier dans le conduit d'alimentation **25** en mélange laitier au cours de l'étape de moulage. L'automatisation du système de moulage **1** est favorisée, en permettant par exemple une régulation automatique du débit de mélange laitier dans le conduit d'alimentation au cours de l'étape de moulage.

En mesurant la valeur représentative de pression dans le conduit d'alimentation **25** en mélange laitier, le débit de mélange laitier circulant dans le conduit d'alimentation **25** peut être mieux régulé.

Bien entendu, diverses modifications peuvent être apportées par l'homme du métier à l'invention qui vient d'être décrite sans sortir du cadre de l'exposé de l'invention.

Le nombre et l'agencement des groupes de soutirage **5** peut varier. La structure de chaque groupe de soutirage **5** sous vide peut également être modifiée. Par exemple, au moins un des groupes de soutirage **5** sous vide peut comporter un conduit de lavage du récipient qui est distinct du conduit de dépressurisation **25**. Par exemple, au moins un des groupes de soutirage **5** sous vide est dépourvu de capteur de valeur représentative de pression **11**.

En variante, le capteur de valeur représentative de pression **11** mesure par exemple une température dans le conduit de dépressurisation **25** à partir de laquelle la pression dans le conduit de dépressurisation **25** est estimée.

En variante, la vanne de vidange **12** est remplacée par une canne de soutirage. La canne de soutirage est un élément tubulaire permettant de vider manuellement la cuve **2**.

En variante, l'obturateur **60** de chaque vanne d'alimentation **6** est par exemple ouvert partiellement en position ouverte et/ou l'obturateur **60** de chaque vanne d'alimentation **6** est par exemple partiellement fermé en position fermée. En position intermédiaire, la position de l'obturateur **60** reste alors strictement entre la position de l'obturateur **60** en position ouverte et en position fermée.

En variante, au moins une des vannes d'alimentation **6** comprend seulement deux positions stables de l'obturateur **60**, la position ouverte et la position fermée. La régulation de l'ouverture et/ou de la fermeture de chaque vanne d'alimentation **6** s'effectuera notamment en ouvrant totalement/ fermant totalement la vanne d'alimentation **6**.

En variante, chaque vanne d'alimentation **6** comprend un actionneur électrique et/ou un actionneur mécanique au lieu de l'actionneur pneumatique **72**.

En variante, au moins une des vannes d'alimentation **6** est dépourvue de détecteur de position **74** de l'obturateur.

Le nombre d'unité électronique centrale **9** et/ou d'unités électroniques locales **7** peut varier. Par exemple, le système de moulage **1** comporte au moins deux unités électroniques centrales **9.**

L'ordre des étapes du procédé de moulage **100** et notamment de la régulation **200** peut varier. Par exemple, la comparaison **207** de la pression dans le conduit de dépressurisation **25** à la deuxième valeur seuil peut avoir lieu avant une comparaison **205** de la pression dans le conduit de dépressurisation **25** à la première valeur seuil. Dans ce cas, l'étape de comparaison **205** de la pression dans le conduit de dépressurisation **25** à la première valeur seuil est notamment facultative lorsqu'il a été déterminé que la pression dans le conduit de dépressurisation **25** était supérieure à la deuxième valeur seuil.

L'étape **109** de nettoyage n'est par exemple pas mise en œuvre à chaque fois. L'étape **109** de nettoyage est par exemple mise en œuvre qu'une seule fois par jour.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

## Revendications

1. Système de moulage (1) d'un produit laitier tel qu'un fromage, comprenant des récipients (3) pour le remplissage de moules (4) en mélange laitier et destinés à être alimentés par une cuve (2), un conduit de dépressurisation (25) par récipient (3) et un conduit d'alimentation (23) en mélange laitier par récipient (3), **caractérisé en ce que** le système de moulage (1) comprend une vanne d'alimentation (6) en mélange laitier par récipient (3) et un dispositif de commande (8) pour la commande de chaque vanne d'alimentation (6), chaque vanne d'alimentation (6) comprenant un obturateur (60) qui est mobile au moins entre une position ouverte et une position fermée, la vanne d'alimentation (6) laissant circuler le mélange laitier à travers le conduit d'alimentation (23) en mélange laitier du récipient (3) lorsque l'obturateur (60) est en position ouverte, la vanne d'alimentation (6) empêchant la circulation de mélange laitier à travers le conduit d'alimentation (23) en mélange laitier lorsque l'obturateur (60) est en position fermée, le dispositif de commande (8) étant configuré pour commander la position de chaque obturateur (60) et pour comparer une pression dans chaque conduit de dépressurisation (25) à une valeur seuil.

2. Système de moulage (1) selon la revendication précédente, dans lequel le dispositif de commande (8) est configuré pour commander à l'obturateur (60) de chaque vanne d'alimentation (6) d'être en position ouverte lorsqu'une valeur de pression dans le conduit de dépressurisation (25) est inférieure à une première valeur seuil lors du vidage de la cuve (2) contenant le mélange laitier vers les récipients (3), et/ou dans lequel le dispositif de commande (8) est configuré pour commander à l'obturateur (60) de chaque vanne d'alimentation (6) d'être en position fermée lorsqu'une valeur de pression dans le conduit de dépressurisation (25) est supérieure à une deuxième valeur seuil lors du vidage de la cuve (2).

3. Système de moulage (1) selon l'une quelconque des revendications précédentes, dans lequel le système de moulage (1) comprend un capteur de valeur représentative de pression (11) par conduit de dépressurisation (25), qui est configuré pour mesurer une valeur représentative de pression dans le conduit de dépressurisation (25).

4. Système de moulage (1) selon la revendication précédente, dans lequel le dispositif de commande (8) comprend une unité électronique de commande (7) par vanne d'alimentation (6), l'unité électronique de commande (7) étant configurée pour commander l'ouverture et/ou la fermeture de l'obturateur (60) de la vanne d'alimentation (6) à partir de la mesure de valeur représentative de pression lors du vidage de la cuve (2), l'unité électronique de commande (7) étant configurée pour comparer la pression dans le conduit de dépressurisation (25) à la valeur seuil.

5. Système de moulage (1) selon la revendication précédente, dans lequel chaque vanne d'alimentation (6) comprend un actionneur pneumatique (72) qui est commandé par l'unité électronique de commande (7) pour ouvrir et/ou fermer au moins partiellement l'obturateur (60) de la vanne d'alimentation, et/ou dans lequel le système de moulage (1) comprend un détecteur de position (74) par vanne d'alimentation (6), qui est configuré pour détecter la position de l'obturateur (60) de la vanne d'alimentation (6).

6. Système de moulage (1) selon l'une quelconque des revendications précédentes, dans lequel le dispositif de commande (8) comprend un module de commande à distance (9) qui est configuré pour permettre à un opérateur humain de commander à distance l'ouverture et/ou la fermeture de chaque vanne d'alimentation (6), notamment pour isoler chaque récipient (3), le module de commande à distance (9) étant notamment situé à distance de chaque récipient (3), de chaque conduit d'alimentation (23) et de chaque conduit de dépressurisation (25).

7. Système de moulage (1) selon l'une quelconque des revendications précédentes, dans lequel chaque obturateur (60) comprend au moins une position intermédiaire stable dans lequel l'obturateur (60) est entre la position ouverte et la position fermée, le dispositif de commande (8) étant configuré pour commander à chaque obturateur (60) d'être en position intermédiaire lorsqu'une valeur de pression dans le conduit de dépressurisation (25) est strictement entre la première valeur seuil et la deuxième valeur seuil lors du vidage de la cuve (2) en mélange laitier.

8. Système de moulage (1) selon l'une quelconque des revendications précédentes, dans lequel le système de moulage (1) est configuré pour réguler la pression dans chaque conduit de dépressurisation (25) en commandant l'ouverture et/ou la fermeture au moins partielle de chaque vanne d'alimentation (6), notamment pour que la pression dans chaque conduit de dépressurisation (25) soit sensiblement constante lors du vidage de la cuve (2).

9. Système de moulage (1) selon l'une quelconque des revendications précédentes, dans lequel le système de moulage (1) comprend un dispositif de dépressurisation qui est configuré pour diminuer la pression dans chaque conduit de dépressurisation (25), notamment en dessous de la pression atmosphérique, le dispositif de dépressurisation comprenant une pompe (26).

10. Système de moulage (1) selon l'une quelconque des revendications précédentes, dans lequel le système de moulage (1) comprend la cuve (2) qui est configurée pour contenir le mélange laitier, les récipients (3) de remplissage de moule (4) étant reliés à la cuve (2) par un circuit de transfert (20) pour transférer un mélange laitier entre la cuve (2) et les récipients (3), le circuit de transfert comprenant les conduits d'alimentation (23) en mélange laitier pour alimenter chacun des récipients (3) en mélange laitier en provenance de la cuve (2).

11. Système de moulage (1) selon l'une quelconque des revendications précédentes, dans lequel le système de moulage (1) comprend un distributeur (22) qui est configuré pour distribuer le mélange laitier en provenance de la cuve (2) entre les conduits d'alimentation (23) en mélange laitier pour transférer le mélange laitier à chaque récipient (3).

12. Système de moulage (1) selon l'une quelconque des revendications précédentes, dans lequel le système de moulage (1) comprend une vanne de vidage (12) de la cuve, la vanne de vidage (12) de la cuve comprend un obturateur qui est mobile entre une position d'ouverture et une position de fermeture, l'obturateur de la vanne de vidage (12) de la cuve laissant circuler le mélange laitier en direction des récipients (3) lorsque l'obturateur est en position d'ouverture, l'obturateur de la vanne de vidage (12) de la cuve empêchant la circulation du mélange laitier en direction de chaque récipient (3) lorsque l'obturateur est en position de de fermeture.

13. Procédé de moulage (100) d'un fromage qui est mis en œuvre à partir d'un système de moulage (1) selon l'une quelconque des revendications précédentes dans lequel le dispositif de commande (8) est configuré pour commander la position de chaque obturateur (60) et pour comparer une pression dans chaque conduit de dépressurisation (25) à une valeur seuil.

14. Procédé de moulage (100) selon la revendication précédente, dans lequel le procédé comprend une étape d'ouverture (207) de chaque vanne d'alimentation (6) lorsque la pression dans le conduit de dépressurisation (25) du récipient (3) est inférieure à une première valeur seuil lors du vidage de la cuve (2), et/ou le procédé de moulage (100) comprenant une étape de fermeture (209) de chaque vanne d'alimentation (6) lorsque la pression dans le conduit de dépressurisation (25) est supérieure à la deuxième valeur seuil lors du vidage de la cuve (2) en mélange laitier.

15. Procédé de moulage (100) selon la revendication précédente, dans lequel l'ouverture et/ou la fermeture de chaque vanne d'alimentation (6) est commandée à partir de la mesure de la valeur représentative de pression dans chaque conduit de dépressurisation (25), de manière à ce que l'ouverture de chaque obturateur (60) soit partielle lorsque la valeur représentative de pression est strictement entre la première valeur seuil et la deuxième valeur seuil lors du vidage de la cuve (2).

16. Procédé de moulage (100) selon l'une quelconque des revendications 13 à 15, dans lequel l'obturateur (60) de chaque vanne d'alimentation (6) est en position ouverte lors de la dépressurisation du conduit de dépressurisation (25) et avant l'ouverture de la vanne de vidage (12) de la cuve, et/ou dans lequel l'obturateur (60) de chaque vanne d'alimentation (6) est dans la position ouverte lorsque la cuve (2) a été vidée et que les moules (4) ont été remplis.
